# EUROPEAN PATENT APPLICATION

(11) **EP 3 581 073 A1**
(43) Date of publication of application: **18.12.2019**
(21) Application number: 18177045.4
(22) Date of filing: 11.06.2018
(51) Int. Cl.: A47J 27/00

(54) **RICE COOKING APPLIANCE AND METHOD OF COOKING RICE**

(71) Applicant: Koninklijke Philips N.V., 5656 AE Eindhoven (NL)
(72) Inventor: CHEN, Yun, 5656 AE Eindhoven (NL); TAN, Jingwei, 5656 AE Eindhoven (NL)
(74) Representative: de Haan, Poul Erik

(57) **Abstract**

A cooking appliance (10) for cooking bran-covered rice (1) is disclosed. The cooking appliance comprises a cooking chamber (14) for cooking the bran-covered rice in water; a heating element arrangement (21, 23, 25) thermally coupled to the cooking chamber; a temperature sensor arrangement (31, 33) thermally coupled to the cooking chamber; and a controller (50) adapted to control the heating element arrangement and being responsive to the temperature sensor arrangement. The controller is adapted to soak the bran-covered rice at a first temperature of 80-90°C for a first period of time; and cook the soaked bran-covered rice at a second temperature for a further period of time after said first period of time, and the second temperature is higher than the first temperature. Also disclosed is a method of cooking bran-covered rice (1) using such a cooking appliance.

## Description

### FIELD OF THE INVENTION

The present invention relates to cooking appliance for cooking bran-covered rice, the cooking appliance comprising a cooking chamber for cooking the bran-covered rice in water; a heating element arrangement thermally coupled to the cooking chamber; a temperature sensor arrangement thermally coupled to the cooking chamber; and a controller adapted to control the heating element arrangement and being responsive to the temperature sensor arrangement.

The present invention further relates to a method of cooking bran-covered rice in such a cooking appliance.

### BACKGROUND OF THE INVENTION

It is well known that bran-covered rice in which the rice grains still contain their outer husk (bran) has significant nutritional benefits over white rice in which the bran layer or husk has been removed, e.g. through polishing, in order to expose the core of the rice grain formed of endosperm cells that mainly consist of starch and protein. Such bran-covered rice, e.g. brown rice, black rice, red rice and so on, typically has a much higher degree of dietary fibre, vitamin B, folate, minerals and so on and is therefore often considered a healthier alternative to white rice.

However, as many people nowadays live busy lives, white rice is often chosen for convenience reasons notwithstanding the inferior nutritional content of white rice compared to bran-covered rice varieties due to the fact that white rice can be prepared much faster than bran-covered rice alternatives, which typically require a period of soaking prior to cooking the rice in order to allow water to rupture and penetrate the outer bran layer or husk such that the inner core of the rice grains can be gelatinized, i.e. cooked, more quickly. And even if people choose to prepare a bran-covered rice variety, they typically pre-soak the rice overnight at room temperature after which the water used for this pre-soaking process is typically discarded leading to the loss of nutrients from the bran-covered rice that have dissolved into the water.

To further facilitate the preparation of rice, domestic cooking appliances, e.g. rice cookers, are available. For example, the Tiger JAX-T10U-K 5.5 Cup (Uncooked) Micom Rice Cooker has a number of cooking programs including a cooking program for brown rice that has an increased water absorption time to improve the cooking of the brown rice. Where such rice cookers deploy a brown rice soaking step in their cooking program, this step typically takes 6-60 minutes at which the water is heated for at least part of the soaking step up to 60°C or below, after which the brown rice is cooked for about 60 minutes if cooked at ambient pressure. Although this provides a marked reduction in the preparation time of such bran-covered rice, this unfortunately is still considered quite lengthy at least by some consumers.

### SUMMARY OF THE INVENTION

The present invention seeks to provide a cooking appliance for cooking bran-covered rice in which the cooking process of such rice can be improved.

The present invention further seeks to provide a method for cooking bran-covered rice in such a cooking appliance.

According to an aspect, there is provided a cooking appliance for cooking bran-covered rice, the cooking appliance comprising a cooking chamber for cooking the bran-covered rice in water; a heating element arrangement thermally coupled to the cooking chamber; a temperature sensor arrangement thermally coupled to the cooking chamber; and a controller adapted to control the heating element arrangement and being responsive to the temperature sensor arrangement, wherein the controller is adapted to soak the bran-covered rice at a first temperature of 80-90°C for a first period of time; and cook the soaked bran-covered rice at a second temperature for a further period of time after said first period of time, and the second temperature is higher than the first temperature.

The present invention is based on the insight that when bran-covered rice such as brown rice is soaked at temperatures in a range of 80-90°C and preferably a temperature of around 85°C, a particularly effective and efficient soaking process is achieved. This can be understood as follows. As will be understood by the skilled person, the water absorption rate of bran-covered rice will increase with increasing temperature, At about 60°C, the gelatinization of the starch of the rice is initiated when sufficient water is present. This causes the outer layer to become sticky when the water temperature reaches 70°C, which together with the bran layer hampers water penetration into the inner core of the rice. On the other hand, when the water temperature exceeds 90°C, the rate of water evaporation is significantly increased such that water penetration into the bran-covered rice grains becomes less efficient due to insufficient water being available, in particular when a metered amount of water has been provided to meet optimal cooking guidelines of the rice. Hence, it surprisingly has been found by the inventors of the invention described in the present application that when the temperature of the water used for soaking the bran-covered rice is increased to a temperature in a range of 80-90°C, the optimal soaking conditions of such bran-covered rice grains are achieved, which improves the rice cooking process in terms of reduction of the overall duration of the cooking process as well as the quality of the cooked rice due to the avoidance of excessive loss of water by soaking at too high temperatures .

In a further refinement, the soaking phase may be divided in a first phase and a subsequent second phase, in which the temperature is increased during the second phase relative to the first phase to further improve the efficiency of the soaking of the bran-covered rice. For example, the temperature during the first phase may be in a range of 80-85°C and the temperature during the second phase may be in a range of 85-90°C. The duration of the first phase may exceed the duration of the second phase, e.g. the first phase may be at least 10 minutes such as 12 minutes and the second phase may be 10 minutes or less, e.g. in a range of 3-10 minutes such as 5 minutes.

In the context of the present application, it should be understood that where reference is made to a cooking appliance, this primarily refers to a cooking appliance suitable for use in a domestic setting, e.g. a kitchen appliance or the like, although the teachings of the present application may also be applied to cooking appliances for commercial purposes. Furthermore, it should be understood where reference is made to bran-covered rice, this refers to rice in which the outer husk around the starchy core of the rice grains is still present. Such bran-covered rice in at least some embodiments of the present invention may be brown rice although it should be understood that the teachings of the present application may be applied to any suitable type of bran-covered rice, e.g. red rice or black rice instead of brown rice.

In a preferred embodiment, the controller is adapted to obtain a parameter indicative of an initial soaking status of said bran-covered rice from a user interface; and set said first period of time to 3-10 minutes if the bran-covered rice has been pre-soaked, and to 10-30 minutes if the bran-covered rice has not been pre-soaked. In other words, in this embodiment, the cooking appliance deploys an adaptive soaking phase in which water is absorbed into the bran layer of the rice and the bran layer ruptures as a result by taking into account the estimated water content of the bran-covered rice to be cooked resulting from whether or not the bran-covered rice has been pre-soaked by the user of the cooking appliance by receiving this information from the user through a user interface. This not only has the advantage that the overall preparation time of the bran-covered rice can be further optimized (i.e. reduced) where such rice has already been pre-soaked, but this further improves the reproducibility of the desired consistency of the cooked rice due to the fact that the water content in the rice prior to initiating the cooking phase can be better controlled by taking into account the initial water content of the rice prior to initiating the soaking phase with the cooking appliance.

The aforementioned adaptive soaking periods may be further optimized in that the controller may be adapted to set the first period of time to 3-5 minutes if the bran-covered rice has been pre-soaked. At this point it is noted that the adaptive soaking periods of bran-covered rice that has not been pre-soaked may be a function of the pressure under which the bran-covered rice is prepared. More specifically, the adaptive soaking periods may be reduced when the rice is cooked at increased pressure, i.e. a pressure above ambient pressure. In a specific embodiment, the first period of time is 15-30 minutes and preferably 20-22 minutes if the bran-covered rice that has not been pre-soaked is cooked at ambient pressure and the first period of time is 10-30 minutes and preferably 15-20 minutes if the bran-covered rice that has not been pre-soaked is cooked at a pressure higher than ambient pressure. To further control the consistency of the cooked rice, the controller may be further adapted to set a ratio of the amount of water to be added to the weight of rice in the cooking chamber, wherein the ratio is 1.4-2.0 if the bran-covered rice has not been pre-soaked, and 1.2-1.9 if the bran-covered rice has been pre-soaked. In this manner, the optimal amount of water for cooking a certain quantity of bran-covered rice can be determined as a function of the initial water content in the rice such that the consistency of the cooked rice remains largely constant independent of whether or not the rice has been pre-soaked.

In a further refinement of the aforementioned adaptive soaking stage implemented by the cooking appliance, the controller may be further adapted to optimize the soaking process as a function of the variety of bran-covered rice to be cooked. This is based on the insight that different varieties of bran-covered rice, e.g. different varieties of brown rice such as Japonica rice and Indica rice have differently shaped rice grains that have husks with different resilience to cracking during the soaking process and require different amounts of water to achieve the best cooking results.

Therefore, in a particular embodiment in which the cooking appliance is adapted to cook the bran-covered rice at ambient pressure, the controller is adapted to obtain a further parameter indicative of the variety of the bran-covered rice, said varieties including Japonica rice and Indica rice and is further adapted to set said ratio to 1.8-1.9 for Japonica rice that has not been pre-soaked; 1.6-1.8 for pre-soaked Japonica rice; 1.9-2.0 for Indica rice that has not been pre-soaked; and 1.7-1.9 for pre-soaked Indica rice.

In another particular embodiment in which the cooking appliance is adapted to cook the bran-covered rice at a pressure higher than ambient pressure, the controller is adapted to obtain a further parameter indicative of the variety of the bran-covered rice, said varieties including Japonica rice and Indica rice and is further adapted to set said ratio to 1.7-1.8 for Japonica rice that has not been pre-soaked; 1.5-1.7 for pre-soaked Japonica rice; 1.8-1.9 for Indica rice that has not been pre-soaked; and 1.6-1.8 for pre-soaked Indica rice.

The controller may be further adapted to control an amount of water to be added to the cooking chamber based on the obtained parameter and further parameter and an obtained indication of a total weight of the bran-covered rice in the cooking chamber to increase the likelihood that the correct amount of water is added to the rice placed in the cooking chamber in order to achieve the desired cooking result, e.g. in terms of texture of the cooked rice.
To this end, in a first embodiment the controller is further adapted to control an amount of water to be added to the cooking chamber by generating a user interface control signal to control the user interface to display the required amount of water to be added to the cooking chamber such that a user is informed through the user interface how much water has to be added to the bran-covered rice in the cooking chamber in order to achieve the desired soaking and cooking result for the rice.

Alternatively, where the cooking appliance further comprises a water reservoir fluidically coupled to the cooking chamber through a valve, the controller may be adapted to control an amount of water to be added to the cooking chamber by generating a valve control signal to control said valve to add the required amount of water to the cooking chamber. Such an automated addition of the correct amount of water to the rice in the cooking chamber rules out user error and therefore reduces the risk of the rice not being prepared as desired by the cooking appliance.

Where reference has been made to a user interface, it should be understood that the cooking appliance may comprise the user interface, i.e. the user interface may be integral to the cooking appliance. Alternatively, the cooking appliance may comprise a wireless communication interface communicatively coupled to the controller for communicating with the user interface, in which case the user interface typically is an external user interface that may form part of another electronic device such as a smart phone, tablet computer, portable computer, desktop computer or the like configured to communicate with the wireless communication interface of the cooking appliance, e.g. to communicate the user-specified parameter to the cooking appliance.

The controller may be further adapted to obtain the further parameter from the user interface. Alternatively, the cooking appliance may comprise an optical sensor communicatively coupled to the controller and mounted in the cooking chamber, said optical sensor being adapted to determine said further parameter. This has the advantage that the user does not have to specify the variety of bran-covered rice, which instead is automatically detected using the optical sensor, e.g. based on the appearance of the rice grains such as grain shape and colour, using a suitable rice variety recognition algorithm.

The second temperature may be 98°C to the boiling point of water, and the further period of time may be 15-30 minutes. The second period of time may be adapted by the controller in response to a further user input, e.g. specifying a desired texture of a particular bran-covered rice variety, as well as in response to other commonly deployed user inputs to control the cooking process of such rice.

According to another aspect, there is provided a method of cooking bran-covered rice in a cooking appliance according to any of the herein described embodiments, the method comprising soaking the bran-covered rice at a temperature of 80-90°C for a first period of time; and cooking the soaked bran-covered rice at a second temperature of 98°C to the boiling point of water for a further period of time after said first period of time. Such a cooking method ensures a shortened total preparation time for the bran-covered rice compared to existing rice-cooking appliances.
Preferably, the method further comprises obtaining a parameter indicative of an initial soaking status of said bran-covered rice from a user interface; and setting said first period of time to 3-10 minutes if the bran-covered rice has been pre-soaked and to 10-30 minutes if the bran-covered rice has not been pre-soaked, e.g. depending on the pressure at which the rice is cooked. By adapting this soaking step based on the water content in the rice to be cooked, a more consistent cooking result can be achieved, which improves user satisfaction with the cooking appliance.

### BRIEF DESCRIPTION OF THE DRAWINGS

Embodiments of the invention are described in more detail and by way of nonlimiting examples with reference to the accompanying drawings, wherein:
FIG. 1 schematically depicts a cooking appliance according to an embodiment;
FIG. 2 schematically depicts a cooking appliance according to another embodiment;
FIG. 3 schematically depicts a cooking appliance according to yet another embodiment;
FIG. 4 depicts a flowchart of a method according to an embodiment; and
FIG. 5-10 depict graphs of typical bran-covered rice preparation cycles with a cooking appliance according to example embodiments.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

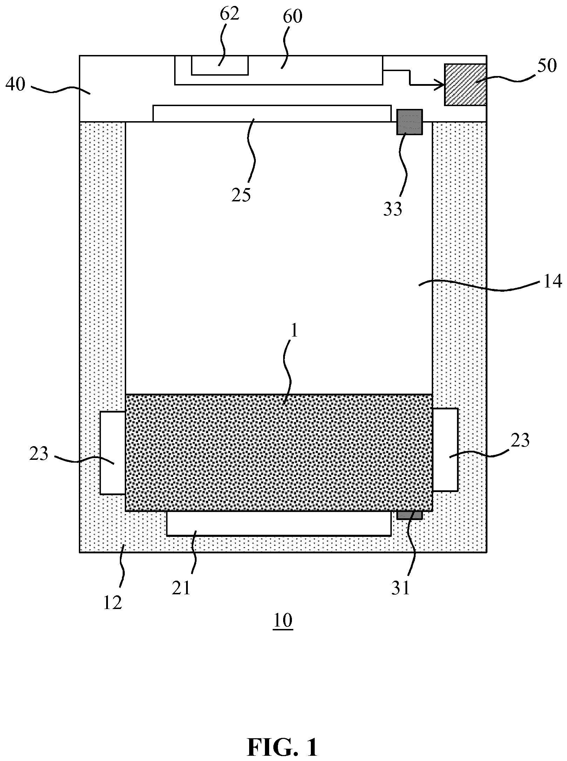

FIG. 1 schematically depicts a cross-sectional view of an embodiment of a cooking appliance 10 according to the present invention. The cooking appliance 10 preferably is a domestic cooking appliance, e.g. a rice cooker or a multi-food cooker, although embodiments of the present invention are not limited to domestic (kitchen) appliances. The cooking appliance 10 comprises a housing 12, which maybe made in any suitable shape using any suitable materials, e.g. metal, metal alloy, plastics and combinations thereof, in which a cooking chamber 14 is located. The cooking appliance 10 may further comprise a lid 40 arranged on the housing 12 in any suitable manner, e.g. a lid 40 that may be removable or a lid 40 that is attached to the housing 12 through one or more hinges. The lid 40 is arranged to seal the cooking chamber 14. Such a seal may be a hermetic seal, which for example is desirable when the cooking appliance 10 may cook a food product such as rice under increased pressure, i.e. a pressure higher than ambient pressure. Alternatively, such a seal may not be hermetic, for instance because the lid 40 comprises one or more vents that may be adjustable, such that the pressure within the cooking chamber 14 remains in equilibrium with ambient pressure.

The cooking appliance 10 typically further comprises one or more heating elements for heating the food product in the cooking chamber 14. For example, the cooking appliance 10 may comprise at least one of a heating element 21 in a floor of the cooking chamber 14, a heating element 23 in a sidewall of the cooking chamber 14 and a heating element 25 in the lid 40 of the cooking appliance 10. Any suitable arrangement of such heating elements may be contemplated, and any suitable type of heating element may be used for this purpose.

The heating elements are typically controlled by a controller 50, which may take any suitable shape, e.g. a micro-processor or the like and may be located in any suitable location within the cooking appliance 10, such as in the lid 40. It is noted for the avoidance of doubt that the connections between the one or more heating elements 21, 23, 25 and the controller 50 are not shown in the figures of the present application for the sake of clarity only. The controller 50 may be arranged to control the one or more heating elements 21, 23, 25 in accordance with a cooking program for a particular food product, which may be programmed into the controller 50 or may be retrieved by the controller 50 from a data storage device (not shown), which may form part of the cooking appliance 10 or may be accessible over a data communication network to which the cooking appliance 10 is connected. For example, the controller 50 maybe adapted to keep the food product in the cooking chamber 14 at a constant temperature for a period of time as defined in the cooking program and operates the one or more heating elements 21, 23, 25 accordingly.

To this end, the cooking appliance further comprises one or more temperature sensors that are communicatively coupled to the controller 50 and that are arranged to sense the temperature of the food product in the cooking chamber 14 such that the controller 50 can operate the one or more heating elements 21, 23, 25 in accordance with the temperature feedback provided by the one or more temperature sensors. The temperature sensors may be located in any suitable location within the cooking appliance 10. For example, a temperature sensor 31 may be located in the floor of the cooking appliance 10 or a temperature sensor 33 may be located in the lid 40 of the cooking appliance 10. Other suitable locations of such a temperature sensors will be immediately apparent to the skilled person. It is noted for the avoidance of doubt that the connections between the one or more temperature sensors 31, 33 and a controller 50 are not shown in the figures of the present application for the sake of clarity only.

In the embodiment shown in FIG. 1, the cooking appliance 10 further comprises a user interface 60 communicatively coupled to the controller 50 through which a user may control the operation of the cooking appliance 10. The user interface 60 may be located in any suitable location within the cooking appliance 10, such as in the lid 40. For example, as previously mentioned the cooking appliance 10 may be operable to perform a plurality of cooking programs such as cooking programs that are optimized for a particular type of food product, in which case a user may select the appropriate cooking program using the user interface 60. Such a cooking program may be configurable, in which case the user may also use the user interface 60 to provide the configuration information for a selected cooking program. For example, where the cooking programs include a program for cooking rice, the user may be able to specify the desired firmness and/or stickiness of the rice to be cooked through the user interface 60, as is well-known per se. Such configuration information may be used by the controller 50 to adjust the cooking program of the selected food product accordingly, e.g. by adjusting the cooking time of the food product as is also well-known per se. Many other examples of such food program configurability for many different types of food will be immediately apparent to the skilled person and are therefore not explained in further detail for the sake of brevity only.

The user interface 60 may take any suitable form. For example, the user interface 60 may include a display 62 under control of the controller 50 through which the various menu options that a user can select are presented through the user. Such a display 62 may be a touchscreen display in which case the user may select a particular menu option by touching the touchscreen display. Alternatively, the user interface 60 may further comprise an arrangement of buttons, dials or the like, which may be used to make such menu option selections as displayed on the display 62 or in the absence of a display 62. Many other suitable embodiments of such a user interface 60 will be immediately apparent to the skilled person and it should be understood that embodiments of the present invention are not limited to a particular embodiment of such a user interface 60.

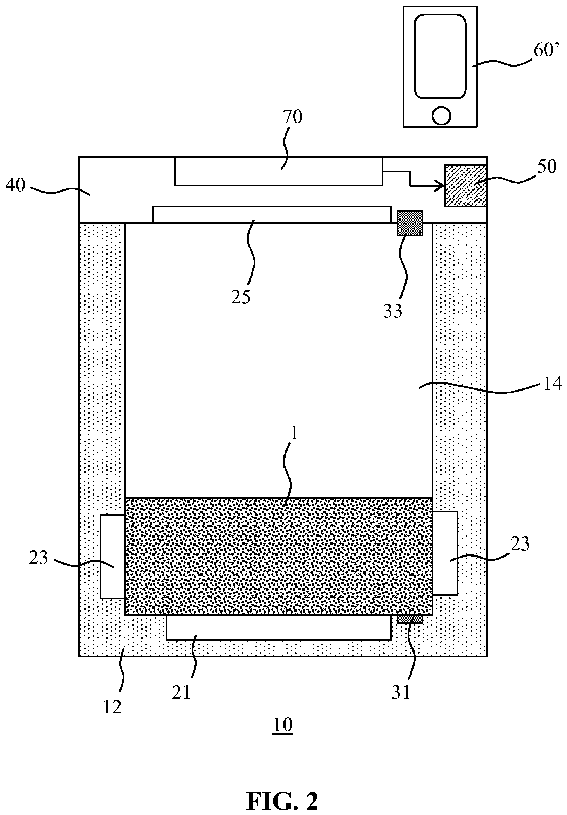

In FIG. 1, the user interface 60 is integrated in the cooking appliance 10. However, in an alternative embodiment, which is schematically depicted by the cross-sectional view in FIG. 2, an external device 60' may comprise the user interface, in which case the cooking appliance 10 maybe connected to the external device 60' through a wireless communication interface 70 of the cooking appliance 10 that is communicatively coupled to the controller 50. The wireless communication interface 70 maybe located in any suitable location within the cooking appliance 10, such as in the lid 40. The wireless communication interface 70 may be adapted to establish a P2P connection such as an infrared or Bluetooth connection between the cooking appliance 10 and the external device 60'or alternatively the wireless communication interface 70 may be adapted to connect to a wireless network such as Wi-Fi network over which the external device 60' can communicate with the cooking appliance 10. The external device 60' may take any suitable shape, such as a dedicated remote control device or an electronic device configured with an app or the like that configures the electronic device to act as the user interface of the cooking appliance 10. Such an electronic device for example may be a smart phone, tablet computer, personal digital assistant, laptop computer, a desktop computer, and so on.

In accordance with the present invention, the cooking appliance 10 comprises a cooking program for cooking bran-covered rice 1. Preferably, the bran-covered rice 1 is brown rice, but the cooking program may alternative be optimized for different types of bran-covered rice 1, such as red rice or black rice. The cooking program for cooking bran-covered rice 1 is implemented by the controller 50 as previously explained and involves two distinct stages; a first stage in which the bran-covered rice 1 is soaked, which is followed by a second stage in which the soaked bran-covered rice 1 is cooked.

In accordance with the present invention, during the first stage the bran-covered rice 1 is soaked at 80-90°C, and preferably at about 85°C for a first period of time during which the water in the cooking chamber 14 is maintained at this temperature by the controller 50 using the one or more heating elements 21, 23, 25 based on the temperature measurements provided by the one or more temperature sensors 31, 33. It has been found that within this temperature range, the grains of the bran-covered rice 1 effectively take up water. For example, for a brown rice having an initial water content of about 10∼11% soaked at 70°C for 15 min, the water absorption is 15% (i.e. the increase in water content in terms of weight gained by the rice) whereas after 30min the water absorption is 21.66% and after 45min the water absorption is 25.98%. In comparison, for a brown rice soaked at 85°C for only 10 minutes, the water absorption is already 16.4% whereas after 20min the water absorption is 26.13% and after 30 mins the water absorption is 35.7%, which demonstrates an unexpectedly large improvement in water absorption rate for a relatively modest increase in water temperature.

As will be explained in more detail below, in some embodiments, the first period of time may be adapted based on one or more parameters that may be provided by the user through the user interface 60 of the cooking appliance 10 or the user interface of the external device 60' although alternatively the first period of time may be a fixed period of time, e.g. in a range of 10-30 minutes. It has been surprisingly found that when the bran-covered rice 1 is soaked at this temperature, not only the rate of water absorption into the outer husk of the rice grains of the bran-covered rice 1 is increased, thereby also accelerating the cracking of the husk, but the gelatinization of the starch core of the rice grains is also initiated during this soaking phase, such that following the soaking of the bran-covered rice 1, the subsequent cooking phase of the soaked bran-covered rice 1 may be reduced in time.

In an example embodiment, the cooking phase of the bran-covered rice 1 is performed at a temperature of 98°C to the boiling point of water in the cooking chamber 14 of the cooking appliance, which maybe 100°C or more depending on the additives, e.g. seasoning, spices, and the like, that have been added to the water for soaking and cooking the bran-covered rice 1. The cooking phase of the bran-covered rice 1 may have a duration of 15-30 minutes, depending on whether or not the bran-covered rice 1 is cooked under increased pressure in which case the duration of the cooking phase may be reduced compared to an embodiment in which the bran-covered rice 1 is cooked at ambient pressure. As previously explained, the duration of the cooking phase may be configurable, for example by a user specifying a desired texture of the bran-covered rice 1, as is well-known per se.

In order to improve the consistency of the cooking results of the bran-covered rice 1 with the cooking appliance 10, the soaking phase of the aforementioned cooking program preferably is an adaptive cooking phase in which the cooking phase is adapted by the controller in response to a user providing a parameter indicative of an initial soaking status of said bran-covered rice with the user interface 60 or the user interface of the external device 60'. For example, a user may specify a duration of a pre-soaking of the bran-covered rice 1 or alternatively the user may simply specify whether the bran-covered rice 1 has been pre-soaked for at least a minimal period of time, e.g. 2 hours, or not. This information maybe used by the controller 50 to adjust the first period of time, i.e. the duration of the soaking phase of the bran-covered rice 1 in order to ensure that the moisture content in the bran-covered rice 1 at the start of the cooking phase is largely constant regardless of whether or not the bran-covered rice 1 has been pre-soaked by the user. This ensures that the texture of the cooked rice, e.g. its stickiness or firmness is largely independent of whether or not the bran-covered rice 1 has been pre-soaked such that the cooked rice has a constant texture or consistency regardless of such a pre-soaking operation by the user. For example, the controller 50 may be adapted to set the first period of time to 3-10 minutes if the bran-covered rice 1 has been pre-soaked, and to 20-30 minutes if the bran-covered rice 1 has not been pre-soaked in other to ensure that the moisture content in the bran-covered rice 1 is largely constant when starting its cooking phase. Preferably, the controller 50 is adapted to set the first period of time to 3-5 minutes if the bran-covered rice 1 has been (sufficiently) pre-soaked and to 20-22 minutes if the bran-covered rice 1 has not been (sufficiently) pre-soaked.

As a further refinement, the controller 50 may leverage the user-provided parameter indicative of an initial soaking status of said bran-covered rice to determine the amount of water that needs to be added to the bran-covered rice 1 in order to soak and subsequently the rice in order to ensure that the optimal amount of water is added to the bran-covered rice 1 such that the cooked rice has the desired texture and consistency, as too little water can lead to undercooked or overly sticky rice, whereas an excess of water can lead to overly wet and sloppy rice, which has lost a substantial amount of nutrients and taste to the excess water.

To this end, the controller 50 may be adapted to to set a ratio of the amount of water to be added to the weight of rice in the cooking chamber 14, wherein the ratio is 1.4-2.0 if the bran-covered rice 1 has not been pre-soaked, and 1.2-1.9 if the bran-covered rice 1 has been pre-soaked to ensure the optimal cooking result of the bran-covered rice 1. The weight of the rice may be provided as an additional parameter by the user through the user interface 60 or the user interface of the external device 60'. Alternatively, the cooking appliance 10 may comprise integrated weight scales (not shown) that can weigh the amount of bran-covered rice 1 that has been added to the cooking chamber 10 and that arranged to provide the controller 50 with this determined weight such that the controller can determine the amount of water to be added to the cooking chamber 14 accordingly.

In order to ensure that the correct amount of water is added to the cooking chamber 14, the controller 50 may generate a user interface control signal to control the user interface 60 of the cooking appliance 10 or the user interface of the external device 60' to display the required amount of water to be added to the cooking chamber 14, e.g. on the display 62. In this embodiment, the user is required to add the correct amount of water to the cooking chamber 14 as per the instructions displayed on the user interface under control of the controller 50.

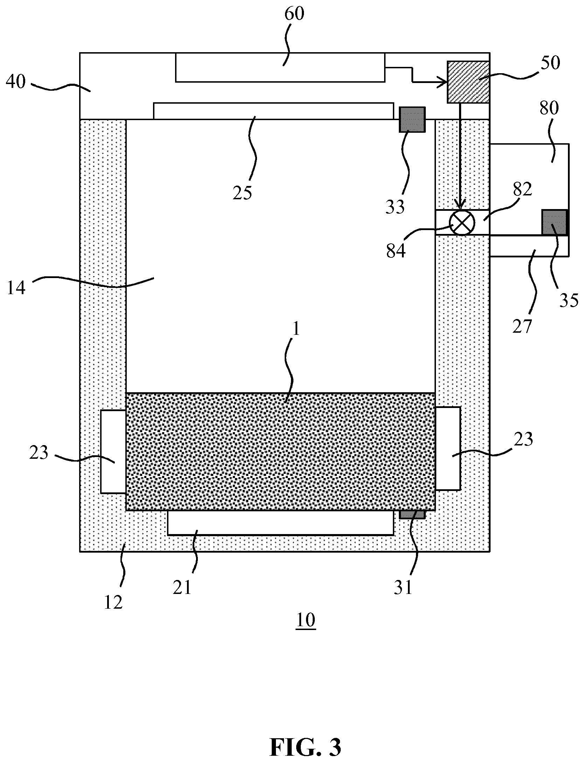

In an alternative embodiment, a cross-sectional view of which is schematically depicted in FIG. 3, the cooking appliance 10 may further comprise a water reservoir 80 that is fluidly coupled to the cooking chamber 14 through a valve 84 under control of the controller 50. The valve 84 typically has a known flow rate (ml/s) such that by opening the valve for a controlled period of time (s) the amount of water flowing from the water reservoir 80 into the cooking chamber 14 can be accurately controlled by the controller 50 by means of the generation of a valve control signal for the valve 84 to ensure that the correct amount of water as determined based on the weight of the amount of bran-covered rice 1 in the cooking chamber and the pre-soaking status of this rice is added to the cooking chamber. The water reservoir 80 may further comprise a further heating element 27 and a further temperature sensor 35 both communicatively coupled to the controller 50 such that the controller 50 can control the temperature of the water in a water reservoir 80 with the further heating element 27 in response to a temperature sensed with the further temperature sensor 35.

In yet a further refinement of the adaptive nature of the soaking phase implemented by the controller 50, the variety of the bran-covered rice 1 may be used as a further parameter by the controller 50 in order to optimize the soaking phase of the bran-covered rice 1 to ensure that optimal cooking result of a particular variety of bran-covered rice 1 is achieved with the cooking appliance 10. For example, where the bran-covered rice is a brown rice, such rice typically has two main varieties. The first variety is Japonica rice, which is mostly produced in Japan and northern parts of China, and which is characterized by round grains that do not break easily, e.g. when soaked. When cooked, this variety produces a fluffy rice that does not stick together. The second variety is Indica rice, which is mostly produced in southern Asia and is characterized by elongated grains that break more easily. This rice when cooked is stickier than Japonica rice and typically requires more water to obtain an optimal cooking result. Such a further parameter indicative of the variety of the bran-covered rice 1 may be provided by the user through the user interface 60 of the cooking appliance 10 or user interface of the external device 60'. Alternatively, the cooking appliance 10 may include an optical sensor (not shown) in the cooking chamber 14 configured to recognize the variety of rice in the cooking chamber, which optical sensor is communicatively coupled to the controller 50 to provide the controller 50 with this further parameter. Table I summarizes how the bran-covered rice cooking program may be adapted as a function of the parameter indicative of the pre-soaking status of the rice and the variety of the bran-covered rice 1 being a brown rice for a cooking appliance 10 for cooking the rice at ambient pressure, whereas Table II summarizes how the bran-covered rice cooking program may be adapted as a function of the parameter indicative of the pre-soaking status of the rice and the variety of the bran-covered rice 1 being a brown rice for a cooking appliance 10 for cooking the rice at higher than ambient pressure.

**Table I**

| Raw brown rice status | Water/rice ratio (w/w) | Soaking phase duration (in min. @ 80-90°C) | Cooking phase duration (in min. @ 98-100°C) |
|---|---|---|---|
| Not pre-soaked | 1.9-2.0 (Indica) | 15-30 (20-22 preferred) | 20-30 (20-22 preferred) |
| | 1.8-1.9 (Japonica) | | |
| Pre-soaked | 1.7-1.9 (Indica) | 3-10 (3-5 preferred) | 20-30 (20-22 preferred) |
| | 1.6-1.8 (Japonica) | | |

**Table II**

| Raw brown rice status | Water/rice ratio (w/w) | Soaking phase duration (in min. @ 80-90°C) | Cooking phase duration (in min. @ 98°C-boiling point) |
|---|---|---|---|
| Not pre-soaked | 1.8-1.9 (Indica) | 10-30 (15-20 preferred) | 20-30 (20-22 preferred) |
| | 1.7-1.8 (Japonica) | | |
| Pre-soaked | 1.6-1.8 (Indica) | 3-10 (3-5 preferred) | 20-30 (20-22 preferred) |
| | 1.5-1.7 (Japonica) | | |

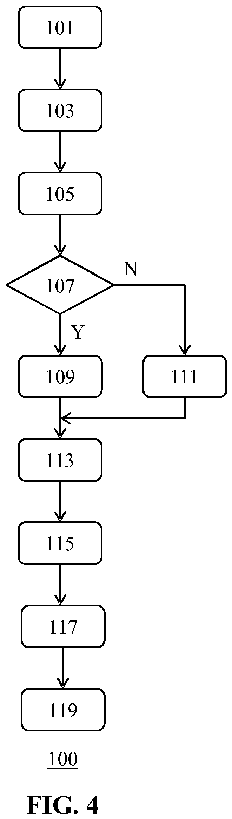

FIG. 4 is a flowchart of a preferred embodiment of a method 100 of cooking a bran-covered rice, preferably a brown rice, in the cooking appliance 10 in which the soaking phase as implemented by the cooking appliance 10 is adaptive as previously explained. In operation 101 the method 100 starts after which the method 100 proceeds to operation 103 in which the bran-covered rice 1, e.g. brown rice, is fed into the cooking compartment 14 of the cooking appliance 10. In operation 105, the user provides the cooking appliance 10 with the parameter indicative of the parameter indicative of an initial soaking status of said bran-covered rice 1 through the user interface 60 or the user interface of the external device 60' as previously explained. At the same time, the user may also provide an indication of the amount (weight) of the bran-covered rice 1 placed in the cooking chamber 14 as well as the further parameter indicative of the variety of the bran-covered rice 1, e.g. Japonica rice or Indica rice. Alternatively, the further parameter may be automatically obtained using an optical sensor in the cooking chamber 14 as previously explained.

In operation 107, the controller 50 of the cooking appliance 10 evaluates the user-provided parameter to determine if the bran-covered rice 1 has been pre-soaked. If this is the case, the method 100 proceeds to operation 109 in which the controller 50 selects the appropriate duration of the soaking phase for pre-soaked bran-covered rice 1, e.g. 3-10 minutes or preferably 3-5 minutes and may further select the appropriate water/rice ratio (in weight), which ratio may be a function of the variety of the bran-covered rice 1, such as explained in more detail for Japonica rice and Indica rice with the aid of Table 1 and Table 2. On the other hand, if the user-provided parameter indicates that the bran-covered rice 1 has not been pre-soaked, the method 100 proceeds to operation 111 in which the controller 50 selects the appropriate duration of the soaking phase for non-soaked bran-covered rice 1, e.g. 20-30 minutes or preferably 20-22 minutes and may further select the appropriate water/rice ratio (in weight), which ratio may be a function of the variety of the bran-covered rice 1, such as explained in more detail for Japonica rice and Indica rice with the aid of Table 1. Of course, other ratios for different varieties of bran-covered rice 1 may be contemplated without departing from the teachings of the present application.

Next, the method 100 may proceed to operation 111 in which the controller 50 controls the amount of water to be added to the cooking chamber 14 in accordance with the respective water/rice ratios determined in operations 109 and 111. The controller 50 to this end may generate a user interface control signal that controls a display of a user interface, e.g. the user interface 60 or the user interface of the external device 60' to display the required amount of water to be added to the cooking chamber 14 in order to optimize the soaking and cooking of the bran-covered rice 1. Alternatively, the controller 50 may open the valve 84 in the conduit 82 connecting the water reservoir 80 to the cooking chamber 14 for an appropriate period of time such that the correct amount of water from the water reservoir 80 is fed into the cooking chamber 14.

After adding the water to the cooking chamber 14, the method 100 proceeds to operation 115 in which the soaking phase of the bran-covered rice 1 is initiated by the controller 50 by heating the water to 80-90°C, preferably 85°C and maintaining the water at this temperature for a period of time that may be a function of whether or not the bran-covered rice 1 has been pre-soaked in order to ensure that after the soaking phase the rice grains have absorbed a desired amount of water. For example, for pre-soaked rice the soaking phase may take 3-10 minutes and preferably 3-5 minutes, whereas for non-soaked rice the soaking phase may take 20-30 minutes and preferably 20-22 minutes.

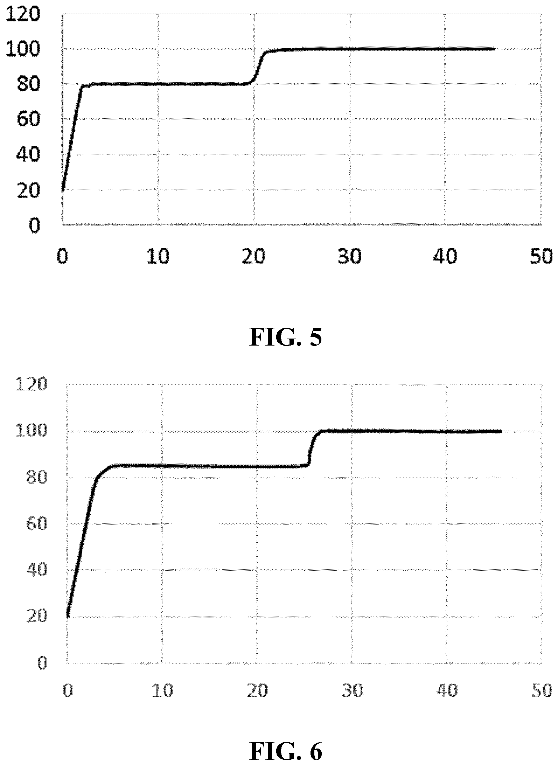

Upon completion of the soaking phase, the method 100 proceeds to operation 117 in which the controller initiates the cooking phase of the soaked rice by increasing the water temperature in a temperature range of 98°C to the boiling point of the water in the cooking chamber 14 and maintain the water at this temperature for 15-30 minutes until the rice is cooked, after which the method 100 terminates in operation 119. A resulting temperature profile to which the bran-covered rice 1 may be exposed is schematically depicted in FIG. 5, which depicts temperature (in °C) on the vertical axis and time (in min) on the horizontal axis. This graph shows that the water temperature in the cooking chamber 14 initially is increased by the controller 50 to 80°C in the soaking phase and is kept at this temperature for about 18 minutes, after which the cooking phase is initiated by increasing the water temperature in the cooking chamber 14 to 100°C and maintaining this temperature for about 25 minutes until the rice is cooked (here at ambient pressure).

Hence, in accordance with embodiments of the present invention, non-soaked bran-covered rice and in particular brown rice may be soaked and cooked to a desired texture in less than an hour with the cooking appliance 10, which preparation time may be further reduced if the bran-covered rice is pre-soaked. The preparation process may be further improved by adapting the duration of the soaking phase implemented by the cooking appliance 10 as a function of the initial moisture content of the bran-covered rice, e.g. if the bran-covered rice has been pre-soaked or not, and by adapting the amounts of water to be added to the rice to be cooked as a function of the initial moisture content of the bran-covered rice, e.g. if the bran-covered rice has been pre-soaked or not and/or as a function of the variety of the bran-covered rice to control the texture and consistency of the cooked rice.

The present invention will now be described in more detail by the following further example embodiments. It should be understood that these example embodiments are for illustrative purposes only and should not intended to limit the present invention to these example embodiments only.

FIG. 6 depicts a graph of a rice cooking programme of a cooking appliance 10 in accordance with an example embodiment in which the rice is cooked at ambient pressure. In this embodiment, the bran-covered rice has not been pre-soaked, such that at the start of the cooking programme after addition of the correct amount of water based on the amount of rice to be cooked, the temperature of the water at the start of the soaking phase is increased to 85°C and maintained at this temperature for 20 minutes after which the cooking phase is initiated. During the cooking phase, the water temperature is increased to boiling point (100°C) and heated for about 10 minutes, after which the heating is terminated and the water is kept at a temperature of 98-100°C for another 10 minutes. Upon completion of the cooking program, the cooking appliance 10 may be opened at the rice is ready to eat. It is noted that dividing the cooking phase in a heating phase and a subsequent non-heating phase is common practice such that this will not be explained in further detail for the sake of brevity only.

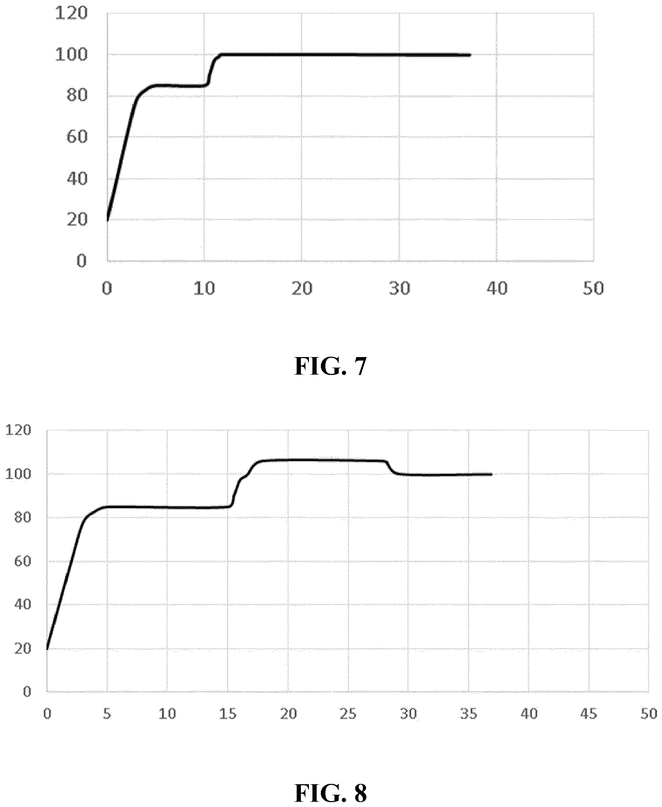

FIG. 7 depicts a graph of a rice cooking programme of a cooking appliance 10 in accordance with an example embodiment in which the rice is cooked at ambient pressure. In this embodiment, the bran-covered rice has been pre-soaked, such that at the start of the cooking programme after addition of the correct amount of water based on the amount of rice to be cooked, the temperature of the water at the start of the soaking phase is increased to 85°C and maintained at this temperature for 5 minutes after which the cooking phase is initiated. During the cooking phase, the water temperature is increased to boiling point (100°C) and heated for about 10 minutes, after which the heating is terminated and the water is kept at a temperature of 98-100°C for another 10 minutes. Upon completion of the cooking program, the cooking appliance 10 may be opened at the rice is ready to eat. It is noted that the example embodiments depicted in FIG. 6 and 7 may be combined in a cooking appliance 10 operable at ambient pressure, e.g. a cooking appliance 10 having an adaptive soaking phase as previously explained.

FIG. 8 depicts a graph of a rice cooking programme of a cooking appliance 10 in accordance with an example embodiment in which the rice is cooked at increased pressure, i.e. a pressure higher than ambient pressure. In this embodiment, the bran-covered rice has not been pre-soaked, such that at the start of the cooking programme after addition of the correct amount of water based on the amount of rice to be cooked, the temperature of the water at the start of the soaking phase is increased to 85°C and maintained at this temperature for 10 minutes after which the cooking phase is initiated. During the cooking phase, the water temperature is increased to boiling point (106°C at the applied pressure) and heated for about 10 minutes, after which the pressure is reduced to ambient pressure in any suitable manner, e.g through natural cooling or pressure release, and heating is terminated such that the water is kept at a temperature of 98-100°C for another 10 minutes. Upon completion of the cooking program, the cooking appliance 10 may be opened at the rice is ready to eat.

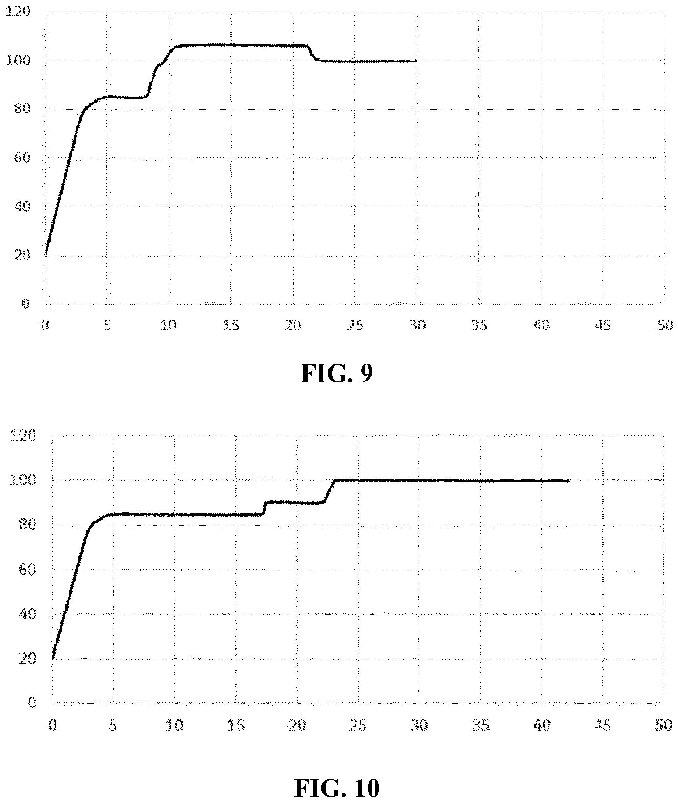

FIG. 9 depicts a graph of a rice cooking programme of a cooking appliance 10 in accordance with an example embodiment in which the rice is cooked at increased pressure, i.e. a pressure higher than ambient pressure. In this embodiment, the bran-covered rice has been pre-soaked, such that at the start of the cooking programme after addition of the correct amount of water based on the amount of rice to be cooked, the temperature of the water at the start of the soaking phase is increased to 85°C and maintained at this temperature for 3 minutes after which the cooking phase is initiated. During the cooking phase, the water temperature is increased to boiling point (106°C at the applied pressure) and heated for about 10 minutes, after which the pressure is reduced to ambient pressure in any suitable manner and heating is terminated such that the water is kept at a temperature of 98-100°C for another 10 minutes. Upon completion of the cooking program, the cooking appliance 10 may be opened at the rice is ready to eat.

FIG. 10 depicts a graph of a rice cooking programme of a cooking appliance 10 in accordance with an example embodiment in which the rice is cooked at ambient pressure. In this embodiment, the bran-covered rice has not been pre-soaked, such that at the start of the cooking programme after addition of the correct amount of water based on the amount of rice to be cooked, the temperature of the water at the start of a first phase of the soaking phase is increased to 85°C and maintained at this temperature for 12 minutes after which a second phase of the soaking phase is initiated during which the water temperature is increased to 90°C and maintained at this temperature for another 5 minutes. Next, the cooking phase is initiated during which the water temperature is increased to boiling point (100°C) and heated for about 10 minutes, after which the heating is terminated and the water is kept at a temperature of 98-100°C for another 10 minutes. Upon completion of the cooking program, the cooking appliance 10 may be opened at the rice is ready to eat. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A cooking appliance (10) for cooking bran-covered rice (1), the cooking appliance comprising:
a cooking chamber (14) for cooking the bran-covered rice in water; a heating element arrangement (21, 23, 25) thermally coupled to the cooking chamber;
a temperature sensor arrangement (31,33) thermally coupled to the cooking chamber; and
a controller (50) adapted to control the heating element arrangement and being responsive to the temperature sensor arrangement, wherein the controller is adapted to:
soak the bran-covered rice at a first temperature of 80-90°C for a first period of time; and
cook the soaked bran-covered rice at a second temperature for a further period of time after said first period of time, and the second temperature is higher than the first temperature.

2. The cooking appliance (10) of claim 1, wherein the controller (50) is adapted to obtain a parameter indicative of an initial soaking status of said bran-covered rice from a user interface; and set said first period of time to 3-10 minutes if the bran-covered rice has been pre-soaked, and to 10-30 minutes if the bran-covered rice has not been pre-soaked.

3. The cooking appliance (10) of claim 2, wherein the controller (50) is adapted to set the first period of time to 3-5 minutes if the bran-covered rice has been pre-soaked and to:
20-22 minutes if the bran-covered rice has not been pre-soaked and is cooked at ambient pressure; or
15-20 minutes if the bran-covered rice has not been pre-soaked and is cooked at a pressure higher than ambient pressure.

4. The cooking appliance (10) of claim 2 or 3, wherein the controller is further adapted to set a ratio of the amount of water to be added to the weight of rice in the cooking chamber, wherein the ratio is 1.4-2.0 if the bran-covered rice has not been pre-soaked, and 1.2-1.9 if the bran-covered rice has been pre-soaked.

5. The cooking appliance (10) of claim 4, wherein the cooking appliance is adapted to cook the bran-covered rice at ambient pressure, and the controller (50) is adapted to obtain a further parameter indicative of the variety of the bran-covered rice, said varieties including Japonica rice and Indica rice and is further adapted to set said ratio to:
1.8-1.9 for Japonica rice that has not been pre-soaked;
1.6-1.8 for pre-soaked Japonica rice;
1.9-2.0 for Indica rice that has not been pre-soaked; and
1.7-1.9 for pre-soaked Indica rice.

6. The cooking appliance (10) of claim 4, wherein the cooking appliance is adapted to cook the bran-covered rice at a pressure higher than ambient pressure, and the controller (50) is adapted to obtain a further parameter indicative of the variety of the bran-covered rice, said varieties including Japonica rice and Indica rice and is further adapted to set said ratio to:
1.7-1.8 for Japonica rice that has not been pre-soaked;
1.5-1.7 for pre-soaked Japonica rice;
1.8-1.9 for Indica rice that has not been pre-soaked; and
1.6-1.8 for pre-soaked Indica rice.

7. The cooking appliance (10) of claim 5 or 6, wherein the controller (50) is further adapted to control an amount of water to be added to the cooking chamber based on the obtained parameter and further parameter and an obtained indication of a total weight of the bran-covered rice in the cooking chamber.

8. The cooking appliance (10) of any of claims 2 to 7, wherein the controller (50) is further adapted to control an amount of water to be added to the cooking chamber by generating a user interface control signal to control the user interface to display the required amount of water to be added to the cooking chamber.

9. The cooking appliance of any preceding claim, further comprising a water reservoir (80) fluidically coupled to the cooking chamber (14) through a valve (84), wherein the controller (50) is adapted to control an amount of water to be added to the cooking chamber by generating a valve control signal to control said valve to add the required amount of water to the cooking chamber.

10. The cooking appliance (10) of any of claims 2-9, wherein the cooking appliance comprises the user interface (60) or comprises a wireless communication interface (70) communicatively coupled to the controller (50) for communicating with the user interface (60').

11. The cooking appliance of any of claims 5-9 in as far as dependent from claim 5 or 6, wherein the controller is adapted to obtain the further parameter from the user interface.

12. The cooking appliance (10) of any of claims 5-11 in as far as dependent from claim 5 or 6, further comprising an optical sensor communicatively coupled to the controller (50) and mounted in the cooking chamber (14), said optical sensor being adapted to determine said further parameter.

13. The cooking appliance of any preceding claim, wherein the second temperature is 98°C to the boiling point of water, and the further period of time is 15-30 minutes.

14. A method (100) of cooking bran-covered rice in a cooking appliance (10) according to any of claims 1-13, the method comprising:
soaking the bran-covered rice at a temperature of 80-90°C for a first period of time; and
cooking the soaked bran-covered rice at a second temperature of 98°C to the boiling point of water for a further period of time after said first period of time.

15. The method (100) of claim 14, further comprising:
obtaining a parameter indicative of an initial soaking status of said bran-covered rice from a user interface; and
setting said first period of time to 3-10 minutes if the bran-covered rice has been pre-soaked, or to 10-30 minutes if the bran-covered rice has not been pre-soaked.
